# EUROPEAN PATENT SPECIFICATION

(11) **EP 1 576 836 B1**
(45) Date of publication and mention of the grant of the patent: **23.04.2008**
(21) Application number: 03772997.7
(22) Date of filing: 13.11.2003
(51) Int. Cl.: H04Q 3/00

(54) **Method and arrangement to select a bearer link between an access network and a local exchange**
Verfahren und Anordnung zur Auswahl einer Verbindung zwischen einem Zugangsnetz und einer Ortsvermittlungsstelle
Procédé et agencement de selection d'une connexion entre un réseau d'accès et un commutateur local

(30) Priority: 27.11.2002 US 429738 P
(43) Date of publication of application: 21.09.2005
(73) Proprietor: TELEFONAKTIEBOLAGET LM ERICSSON (publ), 164 83 Stockholm (SE)
(72) Inventor: HASTER, Lars-Olof, S-141 31 Huddinge (SE)
(74) Representative: Sjöberg, Mats Hakan
(86) International application number: PCT/SE2003/001756
(87) International publication number: WO 2004/049738

(56) References cited:
- WO-A1-00/21259
- WO-A2-99/65187
- DATABASE WPI Week 200331, Derwent Publications Ltd., London, GB; Class WO1, AN 2003-326364, XP002992586 & KR 2002 095 510 A (LG ELECTRONICS INC.) 27 December 2002

## Description

### TECHNICAL FIELD OF THE INVENTION

The present invention relates to methods and arrangements for improved selection of bearer links in a telecommunication network.

### DESCRIPTION OF RELATED ART

A V5 interface is a standardised interface between a local exchange and an access network. The European Telecommunications Standard Institute ETSI has produced standards of type V, for example the V5.1 and V5.2 interfaces. The V5.1 interface is defined in ETSI EN 300 324 and the V5.2 interface is defined in ETSI EN 300 347.

The V5 interface is defined in a way that the local exchange should not know the internal architecture of the access network and vice versa. Such a view makes it possible to have an independent development of each side without impacting the other and also makes it possible to connect products from different vendors as long as the standard is implemented.

Small access networks are implemented with one 2048 kbit/s digital external link to a local exchange while larger access networks have several external links of that kind. Small access networks could use both the V5.1 and V5.2 interface standard while larger networks could use only V5.2. Since the access network architecture is not known by the local exchange this can result in strange behaviour when setting up a connection between the network and the user. The access network needs to be subdivided in groups of line boards/line interfaces to be scalable from very small networks with a few links up to maybe several 100 or 1000 links. Since the local exchange selects which channel/link to be used over the V5 interface for the actual user, the access network must be able to handle an internal mesh network that makes it possible to connect any channel from any external link in the V5 interface to any user. If the mesh network is not big enough this can result in calls with congestion due to overloaded unavailable internal links in the access network.

In ETSI EN 300 347-1 V2.2.2 is disclosed how the V5.2 BCC protocol provides means for the local exchange to request the access network to establish and release connections between specified network user ports and specified V5.2 interface time slots within a link. However, the standard does not yet comprise means and methods to select a preferred external link to be used for a call in order to avoid congestion due to unavailable internal links in the access network.

In the Canadian Patent Application CA 2,201,210 is disclosed an automatic restoration of network access within a communication system by providing continual network access to subscriber lines in the event of transmission line failure. The problem with network access restoration is solved by re-provision of a non-concentrated line, in case of transmission line failure, to another dedicated transmission line. The Canadian Application does however not solve problems caused by heavy signaling on internal links in the access network.

### SUMMARY OF THE INVENTION

The present invention solves problems related to unwanted congestion situations and unneeded message flow at call set-up in an internal mesh network in an access network. Setting up a connection using an inexpedient external link between the access network and a local exchange may result in congestion due to signalling over cross bindings in the access network.

The problem is solved by the invention by locating a preferred external link for the connection. A preferred link is defined as a link between the access network and the local exchange that is closely located to an involved user connected to the access network.

A purpose with the invention is to obtain a minimum of internal signalling in the access network when setting up a connection. Another purpose is to add functionality related to a more efficient implementation of the interface in the local exchange and still be able to communicate with different access network implementations.

More in detail, the problem is solved by the invention by methods and arrangements for selecting a bearer link between the access network and the local exchange. The exchange hereby comprises a mapping table wherein each user connected to the access network is mapped to at least one preferred link. Upon call establishment where at least one user of the connected users is involved, a preferred link for the at least one user is selected from the table and the call set-up takes place using the selected link.

An advantage with the invention is that a congestion situation due to heavy internal signalling in the access network is avoided.

Another advantage with the invention is that permitted maximum traffic intensity may be increased.

Yet another advantage is that a simplified mesh network makes the configuration of the access network simpler/cheaper.

The invention will now be described more in detail with the aid of preferred embodiments in connection with the enclosed drawings.

### BRIEF DESCRIPTION OF THE DRAWINGS

Figure 1 shows a block schematic illustration of users connected to a local exchange, either directly or via access networks.
Figure 2 shows a block schematic illustration of a calling user connected to a local exchange via a first access network and a called user connected to the exchange via a second access network
Figure 3 shows a block schematic illustration of a called user connected to the local exchange via the first access network and a calling user connected to the exchange via the second access network.
Figure 4 shows how both a calling user and a called user are connected to the first access network.
Figure 5 shows a flow chart illustrating the method when either a calling user, a called user or both the calling and the called user are connected to the first access network.

### DETAILED DESCRIPTION OF EMBODIMENTS

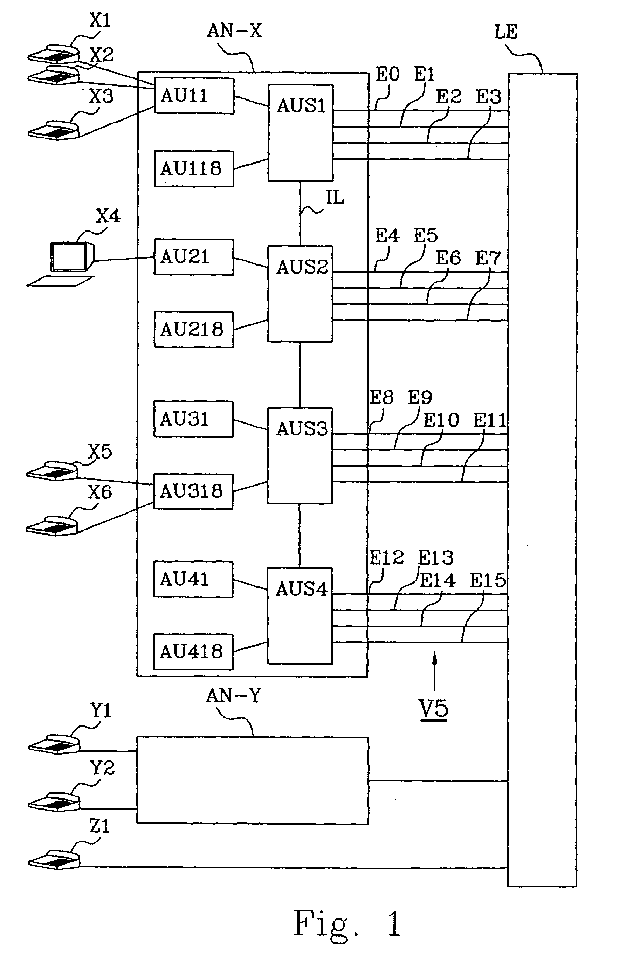

Figure 1 discloses a local exchange LE associated with users X1-X6, Y1-Y2, Z1, either directly or via an access network AN-X, AN-Y. For the sake of clarity only a small fraction of the total number of users associated with the local exchange LE can be seen in the figure.

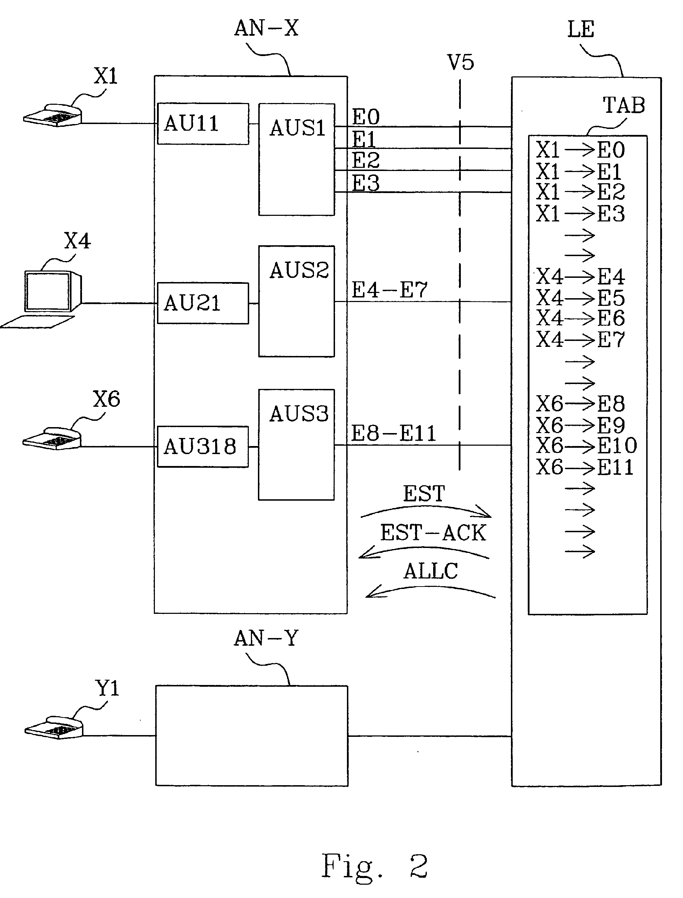

The local exchange LE in the example is connected to a first access network AN-X via sixteen links E0-E1 divided into four groups. A first group comprises the four links E0-E3 and is connected to the access network AN-X via a first access unit switch AUS1. E4-E7 form a second group connected to the AN-X via a second access unit switch AUS2, E8-E11 form a third group connected via a third access unit switch AUS3, and E12-E15 form a fourth group connected via a fourth access unit switch AUS4. Each access unit switch in the example is connected to users via eighteen access units. Only two access units per switch can be seen in figure 1. In the figure, AUS1 is connected to the access units AU11 and AU118, AUS2 is connected to AU21 and AU218, AUS3 is connected to AU31 and AU318, and AUS4 is connected to AU41 and AU418. Figure 1 discloses users X1-X6 associated via the access network AN-X with the local exchange LE. Users Y1 and Y2 are connected to the local exchange LE via a second access network AN-Y, and a user Z1 is directly connected to the local exchange LE. The interface between the local exchange LE and the access network AN-X, is of type V5. Supported access types in the V5 interface standard are ISDN and PSTN services, where ISDN services are provided for digital communication and PSTN services for speech communication. As mentioned, problems may occur when a connection is set up between for example a user X3 belonging to the first access unit switch AUS1, by using a link belonging to another access unit switch, for example the link E15 connected to the fourth access unit switch AUS4. In this case, connection establishment will result in signalling on internal links IL on cross bindings between the access unit switches AUS1-AUS4. Heavy signalling in a mesh network between access unit switches may result in congestion. In a first embodiment of the invention, a solution to this problem will be discussed with aid of figure 2.

Figure 2 discloses a first embodiment of the invention and shows some of the parts already shown in figure 1. The local exchange LE is connected over the V5 interface via the first access network AN-X to a telephone user X1, a so called PSTN user. The user X1 is connected via the access unit AU11 and the access unit switch AUS1 in the access network. AUS1 is connected by four links E0-E3 to LE. A computer terminal X4, a so-called ISDN user, is in the same way connected via AU21 and AUS2 in the access network to the local exchange LE. AUS2 is connected to LE by the links E4-E7. A PSTN terminal X6 is in the same way connected via AU318 and AUS3 by the links E8-E11. The user Y1 is connected via the second access network AN-Y to the local exchange.

The local exchange comprises a mapping table TAB. According to the invention, each user is mapped in the table to at least one preferred link. In the embodiment disclosed in figure 2, all users that are associated with the first access unit switch AUS1 (only X1 can be seen in figure 2) are mapped to four preferred links E0, E1, E2 and E3. Upon call establishment made by the user X1 to the user Y1, an establishment message EST is sent from the access network AN-X to the local exchange LE. The establishment message comprises identification information of the calling user X1, for example identification of the port to which X1 belongs in the access network. The local exchange replies by sending an acknowledge message EST-ACK to the access network. In the local exchange LE, a search routine starts to find a suitable link for the call. The links E0-E3 are all preferred links for the user X1. The link E2 is found to be available and is selected. The links are 2048 kbit/s links and comprises thirty-two 64kbit/s channels. An available channel in E2 is selected for the call. An allocation message ALLC is sent from the local exchange LE to the access network AN-X on the BCC link. The allocation message comprises identification information of the selected channel and preferred link E2. The call is set-up by using the selected bearer. If all preferred links were unavailable for the call, another (not preferred) link will be selected, either randomly or after a predetermined scheme.

As an alternative to the first embodiment, the user X1 can be mapped to for example only E0 and E1. As a further alternative, preferred links may be placed in order of preference. In the first embodiment preferred links was unranked, i.e. the links were not placed in order of preference. Links between the access network and the local exchange are however consolidated into groups in the first embodiment. Each group comprises links connected to one access unit switch. As an alternative to the example in figure 2, instead of mapping each user connected to the access network to at least one preferred link, each user can be mapped in the mapping table TAB to at least one preferred group of links.

An access network based on the V5.2 interface uses several different digital links. Since a PSTN user initiated the establishment message, a signalling channel on a PSTN link was used. If the message instead came from an ISDN user, an ISDN link would have been used. A BCC data link carries messages to allocate and de-allocate timeslots/channels. A V5.2 BCC protocol provides means for the local exchange LE to request the access network AN-X to establish and release connections between a specified AN-X user port and a specified V5.2 interface bearer channel on a specified link.

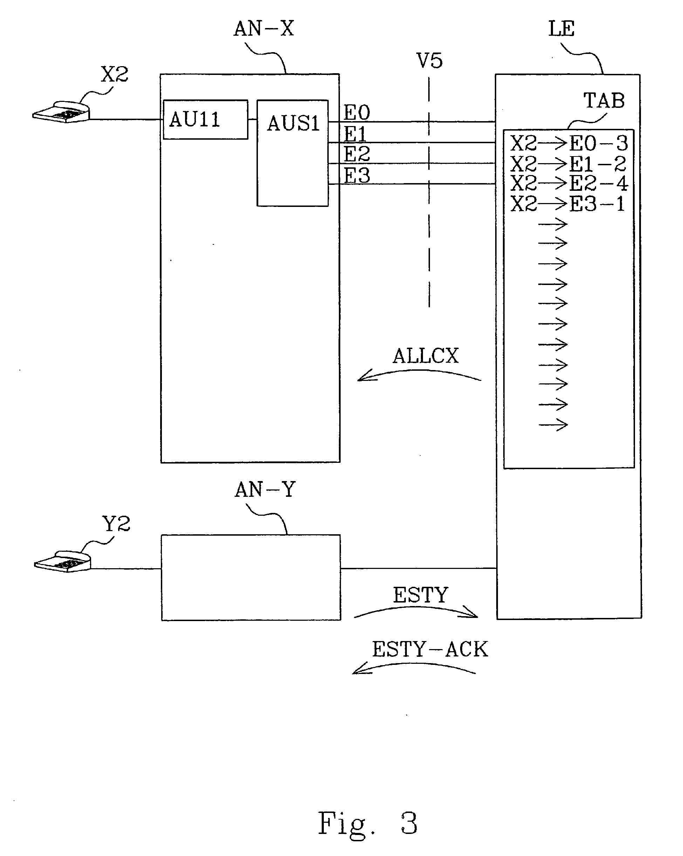

Figure 3 discloses a second embodiment of the invention. In this embodiment the user X2 is a called user, while Y2 is a calling user. The entities seen in figure 3 are the same as the ones already described and explained in figure 1. The mapping table TAB is configured somewhat different than in the first embodiment while the preferred links are placed in order of preference. The link E3 is ranked as number 1 for the user X1. E1 is ranked as number 2, E0 is number 3 and E2 is number 4. When the calling user Y2 initiates a call, an establishment message ESTY is sent from the second access network AN-Y to the local exchange LE. The message ESTY is acknowledged by an establishment-acknowledge message ESTY-ACK. The acknowledge-message is followed by identification information of the called user X2 in the state of DTMF tones sent from the access network. In the local exchange LE, the search routine starts to find a suitable link for the call. The highest ranked available link is selected. In this example E3 was unavailable and the link E1 is instead found to be the highest ranked available link and is therefore selected for the call. An allocation message ALLCX is sent from the local exchange LE to the first access network AN-X. The allocation message comprises identification information of the selected channel and preferred link E3. In the example above, the calling user Y2 is connected to the second access network. Another alternative is that Y2 is connected either directly to the local exchange or via for example a GSM trunk or a private automatic branch exchange PABX.

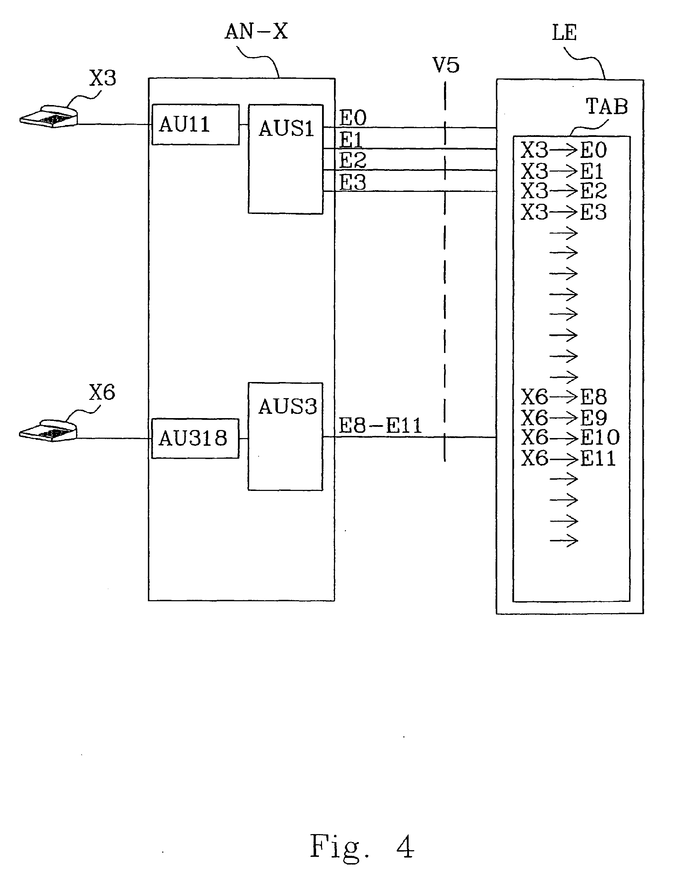

Figure 4 discloses a third embodiment of the invention. In this embodiment the user X3 is a called user, while the user X6 is a calling user. In figure 2 only the calling user was connected to the first access network while in figure 3 only the called user was connected to the first access network. In figure 4 both the calling and the called users are connected to the same first network.

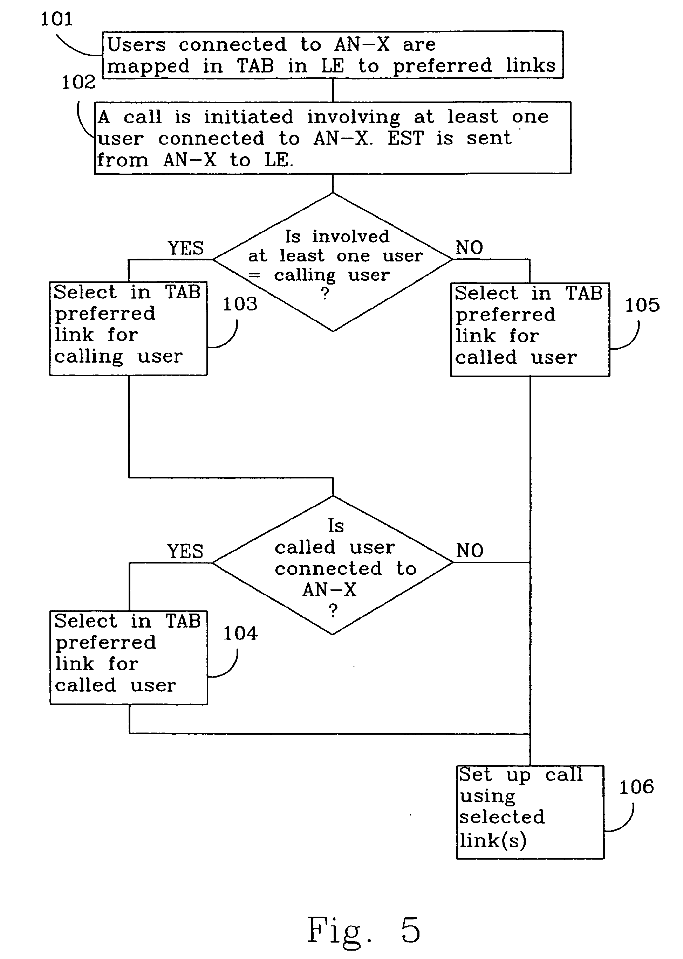

In figure 5 the most essential steps of the disclosed embodiments can be seen in a flow chart. The flow chart shows the method when either one of the users or both the calling user and the called user are connected to the first access network. The flow chart is to be read together with the earlier disclosed figures. The method according to the invention comprises the following steps:
- All users X1-X6 connected to the first access network AN-X are each one mapped to at least one preferred link in the mapping table TAB in the local exchange LE. In figure 4 only the users X3 and X6 are shown. This step is shown in figure 5 by a block 101.
- The calling user X6 initiates a call to the called user X3. A call establishment message is sent from the access network AN-X to the local exchange LE on the BCC link. The message comprises identification information of the calling user X6 and, after acknowledgement, information of the called user X3 as explained in the second embodiment. This is shown in figure 5 by a block 102.
- Since one of the involved users is a calling user, a preferred link E8 for the calling user X6 is selected in the mapping table TAB by using the search routine. This step is shown in figure 5 by a block 103.
- If instead the call was initiated by a user not associated to the local exchange via the access network, no calling user connected to the access network AN-X existed in the establishment message, and only a preferred link for the called user is selected from the mapping table TAB. This is shown by a block 105.
- Since also the called user X3 is connected to the access network AN-X, a preferred link E2 for X3 is selected from the mapping table TAB by using the search routine. This is shown in figure 5 by a block 104.
- The call is finally set-up by using the selected links (or link). This is shown in figure 5 by a block 106.

An arrangement according to the invention comprises a mapping table MAP consisting of one or several memory units. A pointer in the local exchange points at a user involved in the call set-up and finds preferred links for the call set-up. Means for receiving information of involved users and means for setting up a call belongs to well-known telecommunication technique.

Different variations are possible within the scope of the invention. A channel on a link may for example comprise more than one 64 kbit/s timeslot. The V5-interface has been used in the description to describe the embodiments but other interface types may well be used to implement the invention. If a connection is established by network management or provisioning actions and is left up indefinitely, then it is called a Permanent Virtual Circuit - PVS. Instead of using 2048kbit/s links to handle users and switches, interfaces to switches and core networks might be based on ATM. The V5 interface signalling will then be transported over ATM instead of 2048kbit/s links and PVC's will be used for the transportation in the ATM.

The invention is of course not limited to the above described and in the drawings shown embodiments but can be modified within the scope of the enclosed claims.

## Claims

1. Method to select a bearer link between an access network (AN-X) and a local exchange (LE) whereby at least one user (X1; X2; X3, X6) is connected to the access network (AN-X), whereby the user is mapped in a mapping table to at least one preferred link (E0-E3; E8-E11) between the access network and the local exchange, and whereby, upon call establishment involving the at least one user (X1; X2; X3, X6), the preferred link (E2; E1; E2, E8) is selected from the table (TAB) and used for the call, **characterized in that** the preferred link is closely located to the mapped user.

2. Method to select a bearer link between an access network (AN-X) and a local exchange (LE) according to claim 1 whereby the links are placed in order of preference in the mapping table.

3. Method to select a bearer link between an access network (AN-X) and a local exchange (LE) according to claim 1 or 2 whereby the links are consolidated into groups (E0-E3, E4-E7, E8-E11, E12-E15) and each user is mapped in the table (TAB) to at least one preferred group.

4. Method to select a bearer link between an access network (AN-X) and a local exchange (LE) according to any of claim 1-3, which method comprises the following steps:
- receiving identification information of a calling user (X1; X6) to the local exchange (LE);
- finding in the mapping table (TAB) a preferred link (E2; E8) mapped to the calling user (X1; X6);
- sending an allocation message (ALLC) comprising identification of the preferred link (E2; E8), from the local exchange (LE) to the access network (AN-X);
- setting-up a connection between the calling user (X1; X6) and the local exchange (LE) using the preferred link (E2; E8).

5. Method to select a bearer link between an access network (AN-X) and a local exchange (LE) according to any of claim 1-3, which method comprises the following steps:
- receiving identification information of a called user (X2; X3) to the local exchange (LE);
- finding in the mapping table (TAB) a preferred link (E1; E2) mapped to the called user (X3);
- sending an allocation message (ALLCX) comprising identification of the preferred link (E1; E2), from the local exchange (LE) to the access network (AN-X);
- setting-up a connection between the local exchange (LE) and the called user (X2; X3) using the preferred link (E1; E2).

6. Method to select a bearer link between an access network (AN-X) and a local exchange (LE) according to claim 5, whereby the identification information is received from a calling user (X6) directly connected to the access network (AN-X).

7. Method to select a bearer link between an access network (AN-X) and a local exchange (LE) according to claim 5, whereby the identification information is received from a calling user (Y2) not directly connected to the access network (AN-X).

8. Arrangement to select a bearer link between an access network (AN-X) and a local exchange (LE) whereby at least one user (X1; X2; X3, X6) is connected to the access network (AN-X), comprising a mapping table in which the user is mapped to at least one preferred link (E0-E3; E8-E11) between the access network and the local exchange, and means to, upon call establishment involving the at least one user (X1; X2; X3, X6), select the preferred link from the table, **characterized in that** the preferred link is closely located to the mapped user.

9. Arrangement to select a bearer link between an access network (AN-X) and a local exchange (LE) according to claim 8, further comprising the following means:
- means in the local exchange (LE) for receiving identification information of an involved user (X1; X2; X3, X6);
- means in the local exchange for finding in the mapping table (TAB) a preferred link (E0-E3; E2-E8) mapped to the involved user;
- means in the local exchange for sending an allocation message (ALLC; ALLCX) comprising identification of the preferred link (E2; E1; E2, E8), from the local exchange (LE) to the access network (AN-X);
- means in the access network (AN) for setting-up a connection between the involved user (X1; X2; X3, X6) and the local exchange (LE) using the preferred link (E2; E1; E2, E8).

## Patentansprüche

1. Verfahren, eine Trägerverbindung zwischen einem Zugangsnetzwerk (AN-X) und einer lokalen Vermittlung (LE) auszuwählen, wobei zumindest ein Benutzer (X1; X2; X3, X6) mit dem Zugangsnetzwerk (AN-X) verbunden ist, wobei der Benutzer in einer Abbildungstabelle auf zumindest eine bevorzugte Verbindung (E0-E3; E8-E11) zwischen dem Zugangsnetzwerk und der lokalen Vermittlungsstelle abgebildet wird und wobei auf eine Anrufherstellung hin, die den zumindest einen Benutzer (X1; X2; X3, X6) beteiligt, die bevorzugte Verbindung (E2; E1; E2, E8) aus der Tabelle (TAB) ausgewählt wird und für den Anruf verwendet wird,
**dadurch gekennzeichnet,**
**dass** die bevorzugte Verbindung nahe an dem abgebildeten Benutzer lokalisiert ist.

2. Verfahren, um eine Trägerverbindung (E0-E15) zwischen einem Zugangsnetzwerk (AN-X) und einer lokalen Vermittlungsstelle (LE) auszuwählen, nach Anspruch 1, wobei die Verbindungen in einer Präferenzreihenfolge in der Abbildungstabelle angeordnet sind.

3. Verfahren, um eine Trägerverbindung (E0-E15) zwischen einem Zugangsnetzwerk (AN-X) und einer lokalen Vermittlungsstelle (LE) auszuwählen, nach Anspruch 1 oder 2, wobei die Verbindungen in Gruppen (E0-E3, E4-E7, E8-E11, E12-E15) vereinigt sind und jeder Benutzer in der Tabelle (TAB) auf zumindest eine bevorzugte Gruppe abgebildet wird.

4. Verfahren, eine Trägerverbindung (E0-E15) zwischen einem Zugangsnetzwerk (AN-X) und einer lokalen Vermittlungsstelle (LE) auszuwählen, gemäß einem der Ansprüche 1-3, wobei das Verfahren die folgenden Schritte umfasst:
- Empfangen von Identifikationsinformation eines anrufenden Benutzers (X1; X6) zu der lokalen Vermittlungsstelle (LE);
- Finden in der Abbildungstabelle (TAB) einer bevorzugten Verbindung (E2; E8), die auf den anrufenden Benutzer (X1; X6) abgebildet ist;
- Senden einer Allozierungsnachricht (ALLC), die eine Identifikation der bevorzugten Verbindung (E2; E8) umfasst, von der lokalen Vermittlungsstelle (LE) zu dem Zugangsnetzwerk (AN-X);
- Aufbauen einer Verbindung zwischen dem anrufenden Benutzer (X1; X6) und der lokalen Vermittlungsstelle (LE) unter Verwendung der bevorzugten Verbindung (E2; E8).

5. Verfahren, eine Trägerverbindung (E0-E15) zwischen einem Zugangsnetzwerk (AN-X) und einer lokalen Vermittlungsstelle (LE) aufzubauen, nach einem der Ansprüche 1-3, wobei das Verfahren die folgenden Schritte umfasst:
- Empfangen von Identifikationsinformation eines angerufenen Benutzers (X2; X3) zu der lokalen Vermittlungsstelle (LE);
- Finden in der Abbildungstabelle (TAB) einer bevorzugten Verbindung (E1; E2), die auf den angerufenen Benutzer (X3) abgebildet ist:
- Senden einer Allozierungsnachricht (ALLCX), die eine Identifikation der bevorzugten Verbindung (E1; E2) umfasst, von der lokalen Vermittlungsstelle (LE) zu dem Zugangsnetzwerk (AN-X);
- Aufbauen einer Verbindung zwischen der lokalen Vermittlungsstelle (LE) und dem angerufenen Benutzer (X2; X3) unter Verwendung der bevorzugten Verbindung (E1; E2).

6. Verfahren, eine Trägerverbindung (E0-E15) zwischen einem Zugangsnetzwerk (AN-X) und einer lokalen Vermittlungsstelle (LE) aufzubauen, nach Anspruch 5, wobei die Identifikationsinformation von einem anrufenden Benutzer (X6) empfangen wird, der direkt mit dem Zugangsnetzwerk (AN-X) verbunden ist.

7. Verfahren, eine Trägerverbindung (E0-E15) zwischen einem Zugangsnetzwerk (AN-X) und einer lokalen Vermittlungsstelle (LE) auszuwählen, nach Anspruch 5, wobei die Identifikationsinformation von einem anrufenden Benutzer (Y2) empfangen wird, der nicht direkt mit dem Zugangsnetzwerk (AN-X) verbunden ist.

8. Anordnung, eine Trägerverbindung (E0-E15) zwischen einem Zugangsnetzwerk (AN-X) und einer lokalen Vermittlungsstelle (LE) auszuwählen, wobei zumindest ein Benutzer (X1; X3, X6) mit dem Zugangsnetzwerk (AN-X) verbunden wird, mit einer Abbildungstabelle (TAB), in der der Benutzer auf zumindest eine bevorzugte Verbindung (E2;E1; E2,E8) zwischen dem Zugangsnetzwerk und der lokalen Vermittlungsstelle abgebildet wird und mit einer Vorrichtung, um auf eine Anrufherstellung hin, die den zumindest einen Benutzer (X1; X2; X3, X6) beteiligt, die bevorzugte Verbindung aus der Tabelle (TAB) auswählt,
**dadurch gekennzeichnet,**
**dass** die bevorzugte Verbindung nahe an dem abgebildeten Benutzer lokalisiert ist.

9. Anordnung, eine Trägerverbindung (E0-E15) zwischen einem Zugangsnetzwerk (AN-X) und einer lokalen Vermittlungsstelle (LE) auszuwählen, nach Anspruch 8, weiter mit den folgenden Vorrichtungen:
- einer Vorrichtung in der lokalen Vermittlungsstelle (LE) zum Empfangen von Identifikationsinformation eines beteiligten Benutzers (X1; X2; X3, X6);
- einer Vorrichtung in der lokalen Vermittlungsstelle (E0-E15) zum Finden in der Abbildungstabelle (TAB) einer bevorzugten Verbindung (E0-E3; E2-E8), die auf den beteiligten Benutzer abgebildet ist;
- einer Vorrichtung in der lokalen Vermittlungsstelle zum Senden einer Allozierungsnachricht (ALLC; ALLCX), die eine Identifikation der bevorzugten Verbindung (E2; E1; E2, E8) umfasst, von der lokalen Vermittlungsstelle (LE) zu dem Zugangsnetzwerk (AN-X);
- einer Vorrichtung in dem Zugangsnetzwerk (AN) zum Aufbauen einer Verbindung zwischen den beteiligten Benutzern (X1; X2; X3, X6) und der lokalen Vermittlungsstelle (LE) unter Verwendung der bevorzugten Verbindung (E2; E1; E2, E8).

## Revendications

1. Procédé de sélection d'une liaison porteuse entre un réseau d'accès (AN-X) et un commutateur local (LE) par lequel au moins un utilisateur (X1 ; X2 ; X3, X6) est connecté au réseau d'accès (AN-X), grâce à quoi l'utilisateur est attaché, dans une table d'application, à au moins une liaison préférée (E0-E3 ; E8-E11) entre le réseau d'accès et le commutateur local et grâce à quoi, lors de l'établissement d'un appel impliquant le, au moins un, utilisateur (X1 ; X2 ; X3, X6), la liaison préférée (E2 ; E1 ; E2, E8) est sélectionnée à partir de la table (TAB) et utilisée pour l'appel,
**caractérisé en ce que** la liaison préférée est localisée étroitement à l'utilisateur attaché.

2. Procédé pour sélectionner une liaison porteuse entre un réseau d'accès (AN-X) et un commutateur local (LE) selon la revendication 1, par lequel les liaisons sont placées dans un ordre de préférence dans la table d'application.

3. Procédé pour sélectionner une liaison porteuse entre un réseau d'accès (AN-X) et un commutateur local (LE) selon la revendication 1 ou 2, par lequel les liaisons sont consolidées en groupes (E0-E3, E4-E7, E8-E11, E12-E15) et chaque utilisateur est attaché dans la table (TAB) à au moins un groupe préféré.

4. Procédé pour sélectionner une liaison porteuse entre un réseau d'accès (AN-X) et un commutateur local (LE) selon l'une quelconque des revendications 1 à 3, lequel procédé comprend les étapes suivantes qui consistent:
- à recevoir une information d'indentification d'un utilisateur appelant (X1 ; X6) au commutateur local (LE) ;
- à trouver dans la table d'application (TAB) une liaison préférée (E2 ; E8) attachée à l'utilisateur appelant (X1; X6);
- à envoyer un message d'affectation (ALLC) comprenant une identification de la liaison préférée (E2 ; E8) du commutateur local (LE) au réseau d'accès (AN-X) ;
- à établir une connexion entre l'utilisateur appelant (X1 ; X6) et le commutateur local (LE) en utilisant la liaison préférée (E2 ; E8).

5. Procédé pour sélectionner une liaison porteuse entre un réseau d'accès (AN-X) et un commutateur local (LE) selon l'une quelconque des revendications 1 à 3, lequel procédé comprend les étapes suivantes qui consistent:
- à recevoir une information d'identification d'un utilisateur appelé (X2 ; X3) au commutateur local (LE) ;
- à trouver dans la table d'application (TAB) une liaison préférée (E1 ; E2) attachée à l'utilisateur appelé (X3) ;
- à envoyer un message d'affectation (ALLCX) comprenant une identification de la liaison préférée (E1 ; E2), du commutateur local (LE) au réseau d'accès (AN-X) ;
- à établir une connexion entre le commutateur local (LE) et l'utilisateur appelé (X2 ; X3) en utilisant la liaison préférée (E1; E2).

6. Procédé pour sélectionner une liaison porteuse entre un réseau d'accès (AN-X) et un commutateur local (LE) selon la revendication 5, par lequel l'information d'identification est reçue d'un utilisateur appelant (X6) connecté directement au réseau d'accès (AN-X).

7. Procédé pour sélectionner une liaison porteuse entre un réseau d'accès (AN-X) et un commutateur local (LE) selon la revendication 5, par lequel l'information d'identification est reçue d'un utilisateur appelant (Y2) qui n'est pas connecté directement au réseau d'accès (AN-X).

8. Agencement pour sélectionner une liaison porteuse entre un réseau d'accès (AN-X) et un commutateur local (LE), par lequel au moins un utilisateur (X1; X2 ; X3, X6) est connecté au réseau d'accès (AN-X), comportant une table d'application dans laquelle l'utilisateur est attaché à au moins une liaison préférée (E0-E3 ; E8-E11) entre le réseau d'accès et le commutateur local, et un moyen pour, lors de l'établissement d'un appel impliquant le, au moins un, utilisateur (X1 ; X2 ; X3, X6), sélectionner la liaison préférée à partir de la table,
**caractérisé en ce que** la liaison préférée est localisée étroitement à l'utilisateur attaché.

9. Agencement pour sélectionner une liaison porteuse entre un réseau d'accès (AN-X) et un commutateur local (LE) selon la revendication 8, comportant en outre les moyens suivants :
- un moyen, dans le commutateur local (LE), destiné à recevoir une information d'identification d'un utilisateur impliqué (X1 ; X2 ; X3, X6) ;
- un moyen, dans le commutateur local, destiné à trouver dans la table d'application (TAB) une liaison préférée (E0-E3 ; E2-E8) attachée à l'utilisateur impliqué ;
- un moyen, dans le commutateur local, destiné à envoyer un message d'affectation (ALLC ; ALLCX) comprenant une identification de la liaison préférée (E2 ; E1 ; E2, E8) du commutateur local (LE) au réseau d'accès (AN-X) ;
- un moyen, dans le réseau d'accès (AN), destiné à établir une connexion entre l'utilisateur impliqué (X1 ; X2 ; X3, X6) et le commutateur local (LE) en utilisant la liaison préférée (E2 ; E1 ; E2, E8).
